# EUROPÄISCHE PATENTSCHRIFT

(11) **EP 0 453 913 B1**
(45) Veröffentlichungstag und Bekanntmachung des Hinweises auf die Patenterteilung: **17.11.1994**
(21) Anmeldenummer: 91105917.8
(22) Anmeldetag: 13.04.1991
(51) Int. Cl.: C01G 37/14

(54) **Verfahren zur Herstellung von Natriumdichromat**
Process for the preparation of sodium dichromate
Procédé de préparation de bichromate de sodium

(30) Priorität: 26.04.1990 DE 4013335
(43) Veröffentlichungstag der Anmeldung: 30.10.1991
(73) Patentinhaber: BAYER AG, 51368 Leverkusen (DE)
(72) Erfinder: Lönhoff, Norbert, Dr., W-5090 Leverkusen 1 (DE); Spreckelmeyer, Bernhard, Dr., W-5090 Leverkusen 1 (DE); Block, Hans-Dieter, Dr., W-5090 Leverkusen 3 (DE); Weber, Rainer, Dr., W-5090 Leverkusen 1 (DE); Halstenberg, Jost, Dr., W-5000 Köln 80 (DE); Rosenow, Bernd, W-5090 Leverkusen 1 (DE)

(56) Entgegenhaltungen:
- EP-A- 0 368 066
- DE-C- 379 410
- FR-A- 1 223 186
- US-A- 3 933 972
- CHEMICAL ABSTRACTS, vol. 92, no. 6, Februar 1980, Columbus, Ohio, US; abstract no. 44022N, MACAROVICI: 'conversion of sodiumchromate to sodiumdichromate' Seite 120 ;
- CHEMISCHE TECHNOLOGIE Bd. 2, Nr. 4, 1982, MUNCHEN Seiten 657 - 664; 'herstellung von chromverbindungen'
- GMELIN-INSTITUT 'gmelins handbuch der anorganischen chemie' 1962 , VERLAG CHEMIE.GMBH. , WEINHEIM/BERGSTRASSE system nr.52. chrom, teil b. seite 470 ,zeile 16

## Beschreibung

Die Erfindung betrifft ein Verfahren zur Herstellung von Natriumdichromat und Natriumdichromatlösungen.

Gemäß Winnacker-Küchler, Chemische Technologie, Band 2, 4. Auflage, 1982, S. 657 bis S. 664 erfolgt die Herstellung von Natriumdichromat durch alkalisch oxidierenden Aufschluß von Chromerz mit Soda und/oder Natriumhydroxid und Luftsauerstoff.

Durch Auslaugen des den Aufschlußofen verlassenden Ofenklinkers mit Wasser oder chromathaltiger wäßriger Lösung, Einstellen des pH-Wertes der Maische auf 7 bis 9,5 und Abtrennung der unlöslichen Bestandteile durch Filtration wird eine Natriummonochromatlösung mit einem Gehalt von 300 bis 500 g/l Na₂CrO₄ erhalten. Die Einstellung des pH-Wertes erfolgt dabei in der Regel mit Schwefelsäure und/oder mit Natriumdichromatlösung. Zur Herstellung von Natriumdichromat werden die Monochromationen der Lösung entweder durch Ansäuerung mit Schwefelsäure, durch Ansäuerung mit Kohlendioxid unter Druck oder durch elektrolytische Ansäuerung in Dichromationen umgewandelt. Bei der Ansäuerung mit Schwefelsäure entsteht Natriumsulfat, das beim Einengen der Lösung auf ca. 70 Gew.-% Na₂Cr₂O₇·2H₂O ausfällt. Das dabei entstehende chromathaltige Natriumsulfat muß einer Aufarbeitung zugeführt werden.

Zur Ansäuerung mit Kohlendioxid wird die Natriummonochromatlösung auf eine Konzentration von 750 bis 1000 g/l Na₂CrO₄ eingeengt und in Autoklaven durch Zufuhr von Kohlendioxid bei einem Druck von 0,5 bis 1,5 MPa (5-15 bar) unter Kühlung mit Kohlensäure gesättigt. Unter Ausfällung von Natriumhydrogencarbonat wird dabei eine etwa 75 bis 95 %ige Umwandlung von Monochromationen in Dichromationen erreicht. Der restliche Umsatz bis zu 100 % kann in einer weiteren Stufe nach Aufkonzentrieren auf 1300 g/l Na₂CrO₄ (bereits gebildetes Na₂CrO₇·2H₂O in Na₂CrO₄-Äquivalenten ausgedrückt) durch Zufuhr von Kohlendioxid erfolgen. Dieser Schritt zum restlichen Umsatz ist jedoch technisch sehr aufwendig. Es ist auch möglich, den restlichen Umsatz mit Schwefelsäure oder durch Elektrolyse auszuführen.

Bei der Umsetzung mit Schwefelsäure entsteht wie beschrieben chromathaltiges Natriumsulfat, das einer Aufarbeitung zugeführt werden muß.

Die elektrolytische Ansäuerung erfolgt durch Einleiten der Natriummonochromatlösung bzw. der zu 75 bis 95 % in Natriumdichromat umgewandelten Natriummonochromatlösung in den Anodenraum einer mit einer Kationenaustauschermembran versehenen Elektrolysezelle. Während der Elektrolyse wandern Natriumionen durch die Membran in den mit Wasser oder einer wäßrigen Lösung gefüllten Kathodenraum der Zelle. Dabei bilden die Natriumionen mit den an der Kathode unter Wasserstoffentwicklung gebildeten Hydroxidionen eine wäßrige natriumhydroxidhaltige Lösung. Im Anodenraum werden die Chromationen durch die unter gleichzeitiger Sauerstoffentwicklung an der Anode gebildeten Wasserstoffionen in Dichromationen umgewandelt. Auch dieses Verfahren ist technisch aufwendig.

Zur Erzeugung von Natriumdichromatkristallen werden die bei den genannten Verfahren erhältlichen Natriumdichromatlösungen durch Verdampfen von Wasser eingeengt. Das dabei kristallisierende Natriumdichromat wird abgetrennt und getrocknet.

Die vorliegende Erfindung beschreitet nun einen anderen technisch einfachen Weg zur Herstellung von Natriumdichromatlösungen und Natriumdichromatkristallen, der die Nachteile der beschriebenen Verfahren nicht aufweist.

Gegenstand der Erfindung ist ein Verfahren zur Herstellung von Natriumdichromat und Natriumdichromatlösungen durch alkalischen oxidierenden Aufschluß von Chromerzen, Auslaugen des erhaltenen Ofenklinkers mit Wasser oder chromathaltiger wäßriger Lösung, Einstellen des pH-Wertes auf 7 bis 9,5, Abtrennung der unlöslichen Bestandteile durch Filtration, wobei eine Natriummonochromatlösung erhalten wird, Umwandlung der Monochromationen dieser Lösung in Dichromationen durch Ansäuerung mit CO₂, Abtrennung von gebildetem Natriumhydrogencarbonat, Abkühlung der Lösung zur Ausfällung von Natriummonochromat und Rückführung von ausgefälltem Natriummonochromat zur Monochromatlösung vor der Ansäuerung, dadurch gekennzeichnet, daß die Monochromatlösung vor der Ansäuerung auf eine Konzentration von 750 bis 1000 g/l aufkonzentriert wird, die Ansäuerung mit CO₂ unter Druck bis zu einem Ansäuerungsgrad von 80 bis 95 % durchgeführt wird und die Abkühlung der Lösung zur Ausfällung von Natriummonochromat auf eine Temperatur von -10 bis -25 °C, bevorzugt auf -10 bis -20 °C, erfolgt.

Durch Ansäuerung von Natriummonochromatlösungen mit Kohlendioxid unter Druck und Abkühlung der Lösung nach Abtrennung von Natriumhydrogencarbonat auf Temperaturen unter -10°C und Filtration von ausgefallenem Natriummonochromat werden Lösungen erhalten, in denen bis zu 99 % der Chromationen der Lösung aus Dichromationen vorliegen. Solche Lösungen, die nur noch geringe Restmengen an Natriummonochromat enthalten, können bei vielen Herstellverfahren, wie der elektrolytischen Herstellung von Chromsäure, der Herstellung von Chromgerbstoffen sowie bei Oxidation organischer Verbindungen, eingesetzt werden.

Zur Herstellung von Natriumdichromatlösungen, in denen sämtliche Chromationen als Dichromationen vorliegen, sowie zur Herstellung von Natriumdichromatkristallen, können die restlichen Monochromationen der Lösung mit einer Säure oder durch Elektrolyse in Dichromationen umgewandelt werden. Vorzugsweise erfolgt die Umwandlung der nach der Abkühlung und Filtration noch anwesenden Monochromationen durch Zugabe von Chromsäure und/oder chromsäurehaltiger Lösung. Geeignete chromsäurehaltige Lösungen werden beispielsweise bei der elektrolytischen Herstellung von Chromsäure erhalten.

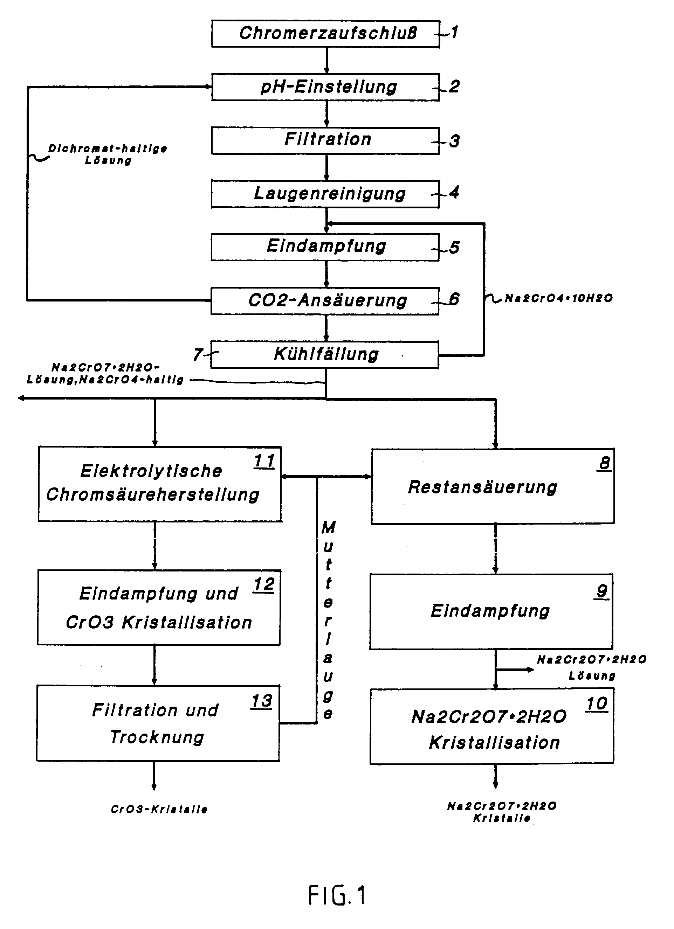

Das erfindungsgemäße Verfahren wird anhand Fig. 1 erläutert. Die in Fig. 1 beschriebene Variante des erfindungsgemäßen Verfahrens stellt eine besonders vorteilhafte Ausführungsform dar.

Chromerz wird durch alkalisch oxidativen Aufschluß mit Soda und Luftsauerstoff bei 1000 bis 1100°C in Gegenwart eines Magerungsmittels in einem Drehrohrofen aufgeschlossen (1). Der dabei entstehende Ofenklinker wird anschließend mit Wasser oder verdünnter Chromatlösung gelaugt und mit natriumdichromathaltiger Lösung auf einen pH-Wert zwischen 7 und 9,5 eingestellt (2). Dabei werden lösliche Alkaliverbindungen des Eisens, Aluminiums und Siliciums in unlösliche und gut filtrierbare Hydroxide bzw. Oxihydrate umgewandelt, die gemeinsam mit den unlöslichen Bestandteilen des Ofenklinkers abgetrennt werden (3). Die entstandene Natriummonochromatlösung mit einem Gehalt von 300 bis 500 g/l an Na₂CrO₄ wird dann, wie in der EP-A-47799 beschrieben, durch Zugabe von Calciumoxid bei pH-Werten von 10 bis 13 von gelöstem Vanadat befreit. Die nun calciumhaltige Lösung wird durch Zusatz bzw. in situ-Erzeugung von Natriumcarbonat durch Fällung als Carbonate von der Hauptmenge an Erdalkaliionen und anderen mehrwertigen Kationen befreit (4). Die Fällung wird dabei vorzugsweise bei Temperaturen von 50 bis 100°C, bei pH-Werten zwischen 8 und 12 und mit einem ca. 2 bis 10-fachen molaren Carbonatüberschuß, bezogen auf die Menge an Erdalkaliionen, durchgeführt. Nach der Filtration wird eine von mehrwertigen Kationen bis auf zusammengenommen weniger als 5 mg/l befreite Natriummonochromatlösung erhalten. In dieser Lösung kann mit Hilfe geeigneter Selektiv-Kationenaustauscher der Gehalt an mehrwertigen Kationen noch weiter herabgesetzt werden. Die Natriummonochromatlösung wird anschließend durch ein- oder mehrstufige Verdampfung auf Gehalte von 750 bis 1000 g/l an Na₂CrO₄ eingeengt (5).

In der nunmehr konzentrierten Lösung wird durch einstufige oder mehrstufige Zufuhr von Kohlendioxid bis zu einem Enddruck von 0,5 bis 1,5 MPa (5-15 bar) bei einer Endtemperatur nicht über 50°C und ein pH-Wert unter 6,5 eingestellt und auf diese Weise unter Ausfällung von Natriumhydrogencarbonat eine 80 bis 95 %ige Umwandlung des Natriummonochromats in Natriumdichromat erreicht (6). Kohlendioxid kann dabei gasförmig oder flüssig eingespeist werden.

Aus der entstehenden Suspension wird unter weiterbestehendem Kohlendioxid-Druck das Natriumhydrogencarbonat abgetrennt oder aber nach dem Entspannen das Natriumhydrogencarbonat vor seiner Rückreaktion mit dem Natriumdichromat rasch abgetrennt.

Das abgetrennte Natriumhydrogencarbonat wird bei 200 bis 300°C, gegebenenfalls unter Zugabe von Natronlauge, zu Soda calciniert, welches dem Chromerzaufschluß (1) zugeführt wird.

Die resultierende, vom Natriumhydrogencarbonat abgetrennte Natriummonochromat-/Natriumdichromat-Lösung wird nach Entnahme eines Teilstroms für die pH-Einstellung des gelaugten Ofenklinkers nunmehr in einem oder mehreren mit Rührern ausgestatteten Gefäßen auf -10 bis -20°C abgekühlt und nach einer Verweilzeit von 5 bis 60 Minuten durch Filtration von anfallendem Natriummonochromat befreit (7). Dabei werden Natriumdichromatlösungen erhalten, in denen 97 bis 99 % des Chromats als Dichromat vorliegen. Das abfiltrierte Natriummonochromat wird - gegebenenfalls nach Zugabe von Wasser - zur Eindampfung (5) oder vor die pH-Einstellung (2) gegeben.

Es ist auch möglich, abfiltriertes Natriummonochromat, gegebenenfalls nach einer Wäsche und Trocknung, einer Verwendung, wie beispielsweise der Herstellung von Korrosionsinhibitoren, zuzuführen.

Um eine Anreicherung von Verunreinigungen, insbesondere von Sulfationen, zu vermeiden, kann es sinnvoll sein, einen Teil des abfiltrierten Natriummonochromats der Restansäuerung (8) zuzuführen. In diesem Zusammenhang hat es sich als vorteilhaft erwiesen, beim Chromerzaufschluß (1) schwefelarme Brennstoffe, vorzugsweise Erdgas, einzusetzen.

Die Abkühlung der Natriummonochromat-/Natriumdichromat-Lösung kann mit technisch üblichen Verfahren, wie sie beispielsweise in "Ullmanns Encyklopädie der Technischen Chemie, 4. Auflage, Band 3, S. 186 bis 218, Verlag Chemie, Weinheim, 1973" beschrieben sind, erfolgen. Wird zur Ansäuerung flüssiges Kohlendioxid verwendet, ist es sinnvoll, die Abkühlung der Lösung direkt oder indirekt über einen Wärmetauscher mit einem geeigneten Wärmetauschermedium durch Verdampfung von Kohlendioxid auszuführen.

Ein Teil der bei der Abkühlung (7) erhaltenen Lösung wird nun der elektrolytischen Chromsäureherstellung (11) oder einer anderen Verwendung zugeführt. Der andere Teil wird mit chromsäurehaltiger Mutterlauge aus der Chromsäure-Filtration (13), mit fester Chromsäure oder mit Chromsäurelösung in eine Natriumdichromatlösung überführt, in der sämtliche Chromationen als Dichromationen vorliegen (8). Diese Lösung wird nun direkt oder nach Eindampfung auf 60 bis 70 Gew.-% Na₂Cr₂O₇·2H₂O (9) ihrer Verwendung zugeführt.

Zur Herstellung von Natriumdichromatkristallen wird die Lösung auf ca. 1650 g/l Na₂Cr₂O₇·2H₂O eingeengt, wobei Natriumdichromat ausfällt, das durch Filtration von der Lösung abgetrennt wird (10).

Bei der elektrolytischen Herstellung von Chromsäure wird die Natriumdichromat-/Natriummonochromat-Lösung in einer mehrstufigen Elektrolyse bei 50 bis 90°C in Zweikammer-Elektrolysezellen mit kationenselektiven Membranen als Trennwände in eine chromsäurehaltige Lösung umgewandet (11). Die Elektrolyse wird dabei so betrieben, daß die genannte Lösung in die Anodenkammer der ersten Stufe eingeführt wird und nach einer teilweisen Umwandlung des Dichromats in Chromsäure sodann der zeiten Stufe, die eine teilweise weitere Umwandlung in Chromsäure bewirkt, zufließt und so weiter stufenweise bis zur letzten Stufe geführt wird, in welcher ein Umwandlungsgrad des Dichromats in Chromsäure von 55 bis 70 % entsprechend einem molaren Verhältnis von Natriumionen zu Chromsäure von 0,45:0,55 bis 0,30:0,70 erreicht ist. Die Zahl der Stufen kann beliebig groß gewählt werden, wobei eine 6 bis 15-stufige Elektrolyse bevorzugt ist.

Die bei der Elektrolyse gebildete Chromsäure und einen Rest Natriumdichromat enthaltende Lösung wird durch Eindampfung auf einen Wassergehalt von ca. 12 bis 22 Gew.-% Wasser bei Temperaturen zwischen 55 und 110°C gebracht, wobei der überwiegende Teil der Chromsäure auskristallisiert (12). Die entstandene Suspension wird anschließend durch Zentrifugieren bei 50 bis 110°C in einem im wesentlichen aus kristalliner Chromsäure bestehenden Feststoff und in eine flüssige Phase, im folgenden Mutterlauge genannt, aufgetrennt (13).

Die erhaltene Mutterlauge wird, gegebenenfalls nach Verdünnung mit Wasser, in die Elektrolyse an eine geeignete Stelle, d.h. in eine Stufe möglichst ähnlichen Dichromat-Umwandlungsgrades, zurückgeführt. Um eine starke Anreicherung von Verunreinigungen im System zu vermeiden, wird ein Teil der Mutterlauge ausgeschleust und bei der Restansäuerung (8) verwendet. Die kristalline Chromsäure wird durch einmaliges oder mehrmaliges Waschen mit 10 bis 50 Gew.%, bezogen auf das Gewicht des Feststoffs, gesättigter oder nahezu gesättigter Chromsäurelösung und durch jeweils an jeden Waschvorgang anschließendes Zentrifugieren von anhaftender Mutterlauge befreit. Die gewaschenen reinen Chromsäurekristalle können nun direkt oder nach einer Trocknung ihrer Verwendung zugeführt werden.

Das erfindungsgemäße Verfahren soll anhand der folgenden Beispiele näher erläutert werden.

In den Beispielen 1 bis 5 wurden Natriumdichromat-/Natriummonochromat-Lösungen eingesetzt, die durch Auflösen von Natriumdichromat und Natriummonochromat hergestellt wurden. Die Zusammensetzungen der Lösungen wurden so gewählt, wie sie bei der großtechnischen Natriumdichromatherstellung nach der Ansäuerung mit Kohlendioxid unter Druck vorliegen können. Im Beispiel 6 wurde eine teilangesäuerte Natriumdichromatlösung eingesetzt, die in einem großtechnischen Verfahren nach der Ansäuerung mit Kohlendioxid erhalten wurde. Die Abkühlung der Lösungen erfolgte mit einem elektrisch betriebenen Laborkryostat.

Bei den Beispielen 1 bis 5 wurden jeweils 50 ml auf die angegebenen Temperaturen abgekühlt, 60 Minuten bei diesen Temperaturen gehalten und anschließend über eine gekühlte Glasfritte filtriert.

### Beispiel 1

Eine Lösung nachfolgender Zusammensetzung wurde auf Temperaturen bis -25°C abgekühlt und wie beschrieben aufgearbeitet.

### Zusammensetzung der Lösung:

| | |
|---|---|
| Gesamt-Chromatgehalt der Lösung (in Na₂CrO₄-Äquivalenten): | 60,1 Gew.-% ≙900 g/l |
| Na₂Cr₂O₇·2H₂O: | 46,7 Gew.-% |
| Na₂CrO₄: | 9,3 Gew.-% |
| Ansäuerungsgrad:*⁾ | 84,5 % |

| | |
|---|---|
| *⁾Der sogenannte Ansäuerungsgrad gibt an, wieviel Prozent des Gesamtchromatgehaltes, berechnet als Na₂CrO₄-Äquivalente, als Dichromat vorliegen. | |

Die Ergebnisse des Versuchs sind in Tabelle 1 zusammengestellt.

**Tabelle 1**

| Temperatur | Konzentration Na₂Cr₂O₇·2H₂O | Konzentration Na₂CrO₄ | Ansäuerungsgrad |
|---|---|---|---|
| 11°C | Beginn der Na₂CrO₄-Kristallisation | | |
| -5°C | 53,6 Gew.-% | 3,3 Gew.-% | 94,7 % |
| -10°C | 55,2 Gew.-% | 2,0 Gew.-% | 96,8 % |
| -15°C | 56,2 Gew.-% | 1,1 Gew.-% | 98,3 % |
| -20°C | 58,6 Gew.-% | 1,0 Gew.-% | 98,3 % |
| -25°C | 59,0 Gew.-% | 1,1 Gew.-% | 98,3 % |

### Beispiel 2

Eine Lösung nachfolgender Zusammensetzung wurde auf Temperaturen bis -25°C abgekühlt und wie beschrieben aufgearbeitet.

### Zusammensetzung der Lösung:

| | |
|---|---|
| Gesamt-Chromatgehalt der Lösung (in Na₂CrO₄-Äquivalenten): | 59,3 Gew.-% ≙874 g/l |
| Na₂Cr₂O₇·2H₂O: | 48,9 Gew.-% |
| Na₂CrO₄: | 6,1 Gew.-% |
| Ansäuerungsgrad: | 89,7 % |

Die Ergebnisse des Versuchs zeigt Tabelle 2.

**Tabelle 2**

| Temperatur | Konzentration Na₂Cr₂O₇·2H₂O | Konzentration Na₂CrO₄ | Ansäuerungsgrad |
|---|---|---|---|
| 7°C | Beginn der Na₂CrO₄-Kristallisation | | |
| -5°C | 53,5 Gew.-% | 2,5 Gew.-% | 95,9 % |
| -10°C | 53,9 Gew.-% | 1,7 Gew.-% | 97,3 % |
| -15°C | 55,2 Gew.-% | 1,1 Gew.-% | 98,2 % |
| -20°C | 54,4 Gew.-% | 1,1 Gew.-% | 98,2 % |
| -25°C | 57,1 Gew.-% | 0,7 Gew.-% | 98,9 % |

### Beispiel 3

Eine Lösung nachfolgender Zusammensetzung wurde auf -20 und -25°C abgekühlt und wie beschrieben aufgearbeitet.

### Zusammensetzung der Lösung:

| | |
|---|---|
| Gesamt-Chromatgehalt der Lösung (in Na₂CrO₄-Äquivalenten): | 62,7 Gew.-% ≙892 g/l |
| Na₂Cr₂O₇·2H₂O: | 48,7 Gew.-% |
| Na₂CrO₄: | 9,8 Gew.-% |
| Ansäuerungsgrad: | 84,4 % |

Die Ergebnisse zeigt Tabelle 3.

**Tabelle 3**

| Temperatur | Konzentration Na₂Cr₂O₇·2H₂O | Konzentration Na₂CrO₄ | Ansäuerungsgrad |
|---|---|---|---|
| 10°C | Beginn der Na₂CrO₄-Kristallisation | | |
| -20°C | 54,0 Gew.-% | 1,2 Gew.-% | 98,0 % |
| -25°C | 57,1 Gew.-% | 0,6 Gew.-% | 99,1 % |

### Beispiel 4

Eine Lösung nachfolgender Zusammensetzung wurde auf -15, -20 und -25°C abgekühlt und wie beschrieben aufgearbeitet.

### Zusammensetzung der Lösung:

| | |
|---|---|
| Gesamt-Chromatgehalt der Lösung (in Na₂CrO₄-Äquivalenten): | 54,0 Gew.-% ≙765 g/l |
| Na₂Cr₂O₇·2H₂O: | 44,4 Gew.-% |
| Na₂CrO₄: | 5,7 Gew.-% |
| Ansäuerungsgrad: | 89,4 % |

Die Ergebnisse sind in Tabelle 4 zusammengestellt.

**Tabelle 4**

| Temperatur | Konzentration Na₂Cr₂O₇·2H₂O | Konzentration Na₂CrO₄ | Ansäuerungsgrad |
|---|---|---|---|
| 0°C | Beginn der Na₂CrO₄-Kristallisation | | |
| -15°C | 48,5 Gew.-% | 1,9 Gew.-% | 96,6 % |
| -20°C | 47,5 Gew.-% | 1,2 Gew.-% | 97,7 % |
| -25°C | 55,2 Gew.-% | 1,1 Gew.-% | 98,2 % |

### Beispiel 5 (Vergleichsbeispiel)

Eine Lösung mit einem Gesamt-Chromatgehalt von 42,7 Gew.-% ≙563 g/l (ausgedrückt in Na₂CrO₄-Äquivalenten) mit einem Ansäuerungsgrad von 49,1 % wurde auf -12°C abgekühlt und wie beschrieben aufgearbeitet. Die Ergebnisse sind in Tabelle 5 zusammengestellt.

**Tabelle 5**

| | Konzentration Na₂Cr₂O₇·2H₂O | Konzentration Na₂CrO₄ | Ansäuerungsgrad |
|---|---|---|---|
| Lösung vor Abkühlung | 19,3 Gew.-% | 21,7 Gew.-% | 49,1 % |
| Lösung nach Abkühlung auf -12°C und Filtration | 33,2 Gew.-% | 4,7 Gew.-% | 88,5 % |

Die Na₂CrO₄-Kristallisation trat ab 10°C ein. Bei der Abkühlung unter -13°C erstarrte die Lösung zu einer festen Masse.

### Beispiel 6

Jeweils 200 ml einer zu 93 % angesäuerten technischen Natriumdichromatlösung folgender Zusammensetzung wurden auf 0, -10, -15 und -20°C abgekühlt, eine Stunde gerührt und über eine gekühlte Glasfritte filtriert.

### Zusammensetzung der Lösung:

| | |
|---|---|
| Gesamt-Chromatgehalt der Lösung (in Na₂CrO₄-Äquivalenten): | 63,9 Gew.-% ≙990 g/l |
| Na₂Cr₂O₇·2H₂O: | 54,7 Gew.-% |
| Na₂CrO₄: | 4,5 Gew.-% |

Die Ergebnisse des Versuchs sind in Tabelle 6 zusammengestellt.

**Tabelle 6**

| Temperatur | Konzentration Na₂Cr₂O₇·2H₂O | Konzentration Na₂CrO₄ | Ansäuerungsgrad |
|---|---|---|---|
| 0°C | 57,0 Gew.-% | 2,6 Gew.-% | 96,0 % |
| -5°C | 57,7 Gew.-% | 2,0 Gew.-% | 96,9 % |
| -10°C | 59,4 Gew.-% | 1,3 Gew.-% | 98,0 % |
| -15°C | 59,8 Gew.-% | 1,0 Gew.-% | 98,5 % |
| -20°C | 60,2 Gew.-% | 0,7 Gew.-% | 98,9 % |

## Patentansprüche

1. Verfahren zur Herstellung von Natriumdichromat und Natriumdichromatlösungen durch alkalischen oxidierenden Aufschluß von Chromerzen, Auslaugen des erhaltenen Ofenklinkers mit Wasser oder chromathaltiger wäßriger Lösung, Einstellen des pH-Wertes auf 7 bis 9,5, Abtrennung der unlöslichen Bestandteile durch Filtration, wobei eine Natriummonochromatlösung erhalten wird, Umwandlung der Monochromationen dieser Lösung in Dichromationen durch Ansäuerung mit CO₂, Abtrennung von gebildetem Natriumhydrogencarbonat, Abkühlung der Lösung zur Ausfällung von Natriummonochromat und Rückführung von ausgefälltem Natriummonochromat zur Monochromatlösung vor der Ansäuerung, dadurch gekennzeichnet, daß die Monochromatlösung vor der Ansäuerung auf eine Konzentration von 750 bis 1000 g/l aufkonzentriert wird, die Ansäuerung mit CO₂ unter Druck bis zu einem Ansäuerungsgrad von 80 bis 95 % durchgeführt wird und die Abkühlung der Lösung zur Ausfällung von Natriummonochromat auf eine Temperatur von -10 bis -25 °C erfolgt.

2. Verfahren nach Anspruch 1, dadurch gekennzeichnet, daß die Umwandlung der nach der Abkühlung und Filtration noch anwesenden Monochromationen durch Zugabe von Chromsäure und/oder chromsäurehaltiger Lösung erfolgt.

## Claims

1. A process for the production of sodium dichromate and sodium dichromate solutions by alkaline oxidative digestion of chrome ores, leaching of the furnace clinker obtained with water or an aqueous chromate-containing solution, adjustment of the pH to 7 - 9.5, removal of the insoluble constituents by filtration, a sodium monochromate solution being obtained, conversion of the monochromate ions of this solution into dichromate ions by acidification with CO₂, removal of the sodium hydrogen carbonate formed, cooling of the solution to precipitate sodium monochromate and return of precipitated sodium monochromate to the monochromate solution before the acidifcation step, characterised in that the monochromate solution is concentrated before acidification to a concentration of 750 to 1,000 g/l, the acidification with CO₂ under pressure is carried out to a degree of acidification of 80 to 95% and the cooling of the solution to precipitate sodium monochromate is continued to a temperature of -10 to -25°C.

2. A process as claimed in claim 1, characterized in that the monochromate ions still present after cooling and filtration are converted by addition of chromic acid and/or a solution containing chromic acid.

## Revendications

1. Procédé pour la préparation de bichromate de sodium et de solutions de bichromate de sodium par dissolution oxydante alcaline de minerais de chrome, lavage du clinker de four obtenu avec de l'eau ou avec une solution aqueuse contenant du chromate, ajustement du pH à une valeur de 7 à 9,5, séparation des constituants insolubles par filtration, sur quoi on obtient une solution de monochromate de sodium, conversion des ions monochromates de cette solution en ions bichromates par acidification avec du CO₂, séparation de l'hydrogénocarbonate de sodium formé, refroidissement de la solution pour faire précipiter le monochromate de sodium et recyclage du monochromate de sodium précipité dans la solution de monochromate avant l'acidification, caractérisé en ce qu'on concentre la solution de monochromate avant l'acidification à une concentration de 750 à 1 000 g/l, on met en oeuvre l'acidification avec du CO₂ sous pression jusqu'à un degré d'acidification de 80 à 95 % et on réalise le refroidissement de la solution pour faire précipiter le monochromate de sodium à une température de -10 à -25°C.

2. Procédé selon la revendication 1, caractérisé en ce qu'on réalise la conversion des ions monochromates encore présents après le refroidissement et la filtration par addition d'acide chromique et/ou d'une solution contenant de l'acide chromique.
